(19) Europäisches Patentamt
European Patent Office
Office européen des brevets

(11) **EP 2 734 862 B1**

(12) **EUROPEAN PATENT SPECIFICATION**

(45) Date of publication and mention
of the grant of the patent:
**22.05.2019 Bulletin 2019/21**

(21) Application number: **12746381.8**

(22) Date of filing: **19.07.2012**

(51) Int Cl.:
***G01T 1/178*** *(2006.01)*

(86) International application number:
**PCT/GB2012/051731**

(87) International publication number:
**WO 2013/011321 (24.01.2013 Gazette 2013/04)**

(54) **GAS SENSOR**

GASSENSOR

CAPTEUR DE GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.07.2011 GB 201112478**

(43) Date of publication of application:
**28.05.2014 Bulletin 2014/22**

(73) Proprietor: **Airthings AS
0256 Oslo (NO)**

(72) Inventor: **SUNDAL, Bjørn Magne
N-0256 Oslo (NO)**

(74) Representative: **Dehns
St. Brides House
10 Salisbury Square
London EC4Y 8JD (GB)**

(56) References cited:
**CA-A1- 2 424 267     US-A- 3 428 807
US-A- 5 489 780**

EP 2 734 862 B1

**Description**

The present invention relates to gas sensors. Preferred embodiments relate to radon gas sensors.

Radon is a radioactive element which at normal temperature and pressure is a gas. It is colourless, odourless and tasteless which means that its presence and concentration is not readily detectable by human beings. However, due to its radioactivity, it can be harmful if the concentration is too high. At normal concentrations, radiation from radon typically accounts for around half of a person's annual natural radiation dose.

The most stable isotope of radon is Radon-222 which has a half life of 3.8 days and is produced as part of the decay chain of Uranium-238 which is present throughout the Earth's crust. Being a noble gas, radon readily diffuses out of the ground and into the air around us. The daughter products of radon decay tend to be charged particles which will readily stick to dust or smoke particles in the air. When these particles are inhaled, they can lodge in the lungs and the subsequent radiation from decay of the radon daughter products causes a risk of lung cancer. Consequently, higher concentrations of radon lead to higher risks of cancer.

The concentration of radon in the atmosphere depends, amongst other things, on ventilation. Areas with good ventilation will have lower radon concentrations, whereas a lack of ventilation leads to radon accumulation and thus increases the radiation level in such areas. Radon levels outside therefore tend to be lower than inside buildings. For example, typical radiation doses from radon may be around 10-20 Bq/m$^3$ outside and may be around 100 Bq/m$^3$ inside. Radon levels can also vary significantly due to variations in geographic location (e.g. different geologies), or due to differences in building materials.

Radon decays by emission of an alpha particle with an energy of 5.5 MeV. The resultant Polonium-218 has a half life of about 3 minutes before emitting an alpha particle of 6.0 MeV. The resultant Lead-214 has a half life of around 27 minutes before beta-decaying to Bismuth-214 which in turn has a half life of 20 minutes and beta-decays to Polonium-214. Polonium-214 has a half life of about 164 microseconds before emitting an alpha particle of 7.7 MeV resulting in Lead-210 which has a half life of 22 years and is thus relatively stable.

Detection of radon to date has been divided into two main methods. The first method is active detection of alpha particles using a photodiode and the second method is passive detection of alpha particles using a track detector. Typically the first method requires a large instrument and needs electrical power to be supplied. Such instruments have typically only been used for larger scale, e.g. commercial or industrial measurements as the instruments are more bulky and expensive. The photodiode is placed in a diffusion chamber of the device. Alpha particles hitting the photodiode create a number of electron-hole pairs which will cause a small current to be generated. These current signals can be detected and counted to provide a measure of the radon concentration within the diffusion chamber. Such active measurements can be provided continuously in time rather than having to wait for the results of a laboratory analysis.

The second method uses much smaller detectors with no power requirement and is thus much more suited to domestic customers. A passive (i.e. unpowered) track chamber is typically placed in a selected location and left for a predetermined period of time (typically from a few weeks up to about 3 months) after which it is sent back to a lab for analysis. Alpha particles emitted within the chamber leave tracks on a film which is also disposed within the chamber. These tracks can be detected in the lab and counted thus providing a measure of the radon concentration in the air within the chamber.

WO 2008/080753 describes a passive radon detector device with a diffusion chamber rotatably mounted above the detector so that it can be rotated in and out of the "ON" position above the detector. When the chamber is in position above the detector, the detector will detect alpha particles from gas which diffuses into the chamber. When the chamber is rotated out of position (the "OFF" position), the detector is covered (the chamber volume is essentially reduced to zero) and is therefore effectively isolated from radon in the surrounding environment.

US 2009/0230305 describes an active radon detector device which is battery powered. The photodiode detector is mounted on the main PCB and is covered by a sampling chamber, also mounted on the main PCB. The photodiode detects alpha particles within the sampling chamber and sends a detection signal to the processing circuitry on the main PCB. The processing circuitry includes a microprocessor unit.

CA2424267A1 discloses a further battery-powered radon detector.

US 5,489,780 describes another active radon detector device in which a pressed metal filter is used as the wall of the diffusion chamber. This filter is mounted directly on the PCB over the photodiode detector, thus defining the sampling volume. The chamber walls are biased to a high voltage relative to the photodiode detector so as to create an electric field therebetween. The device is powered by a combination of an AC power supply and a DC battery pack.

In active detectors, it is desirable to create an electric field between the sensor and the walls of the diffusion chamber. For example, in a radon detector, when radon atoms within the chamber decay, the daughter products are typically positively charged particles. Such charged particles have a strong tendency to "plate out", i.e. to attach to nearby surfaces. Once a particle has plated out, it tends to stay put. Thus the radon daughter products in such active devices tend to be distributed over the inside walls of the diffusion chamber. In the presence of an electric field as described above, those daughter products will drift in the direction of the electric field, i.e. towards the sensor. Therefore the distribution of daughter products will be strongly concentrated on the surface of the sensor itself.

The advantage of such arrangements is that the sensor senses a much higher proportion of decays from particles which sit directly in its surface than from those distributed around the diffusion chamber walls. This is because for any given decay, the direction of the radiation is random. For particles located on the chamber walls, the sensor only represents a small solid angle of directions in which that radiation will be detected. By contrast, for particles on the surface of the sensor, the sensor represents close to 50% solid angle, i.e. it has close to 50% probability of detecting the radiation from the decay of such particles.

Thus the electric field between the sensor and the chamber walls greatly increases the number of detected decays of radon daughter products and thereby greatly increases the rate of accumulation of data in the instrument.

At typical atmospheric radon concentrations, the number of alpha particles emitted per unit time within the chamber can be very low (at typical radon concentrations, the detector in a chamber with a volume of about 25 cubic centimetres might only be expected to detect in the order of one alpha per hour). It can therefore take a significant amount of time to acquire enough data to provide a statistically reliable measurement. By increasing the rate of detections from radon daughter products, the rate of data accumulation can be increased and therefore a reliable read-out can be provided much faster.

The conversion of the raw sensor data to an estimate of the radon concentration relies on a statistical analysis of the probability of sensing decays from various locations within the chamber. This analysis is influenced by a number of factors. One such factor is the probability that a daughter product will plate out on the sensor. This depends in part on the strength of the electric field between the sensor and the chamber walls. Therefore variations in the strength of that field lead to variations in the probability of daughter products plating out on the sensor and thus variations in the accuracy of the calculated estimate of radon concentration.

It is therefore desirable to provide a regulated bias voltage to the diffusion chamber so that the electric field within the chamber remains relatively constant in strength. In larger instruments which operate from mains power, this can be achieved easily with voltage regulator circuits. However such instruments are bulkier and consume more power. They are also restricted in that they can only be located in positions which are large enough to accommodate the instrument's bulk and in positions where mains power can be supplied.

Battery powered instruments are much more flexible as they can be made smaller and can thus be placed in more restricted spaces. They can also be placed where no mains power (or other external power) is available. However the voltage provided by typical consumer batteries varies over the lifetime of the battery. For example a standard 1.5 V alkaline cell typically provides an output voltage of 1.6 V at the start of its life, falling to 1.1 V at the end of its life. Battery powered instruments are also limited by the lifetime of these batteries. If the instrument draws too much power then either the lifetime of the device will be too short or the instrument will have to be made bulkier to accommodate larger batteries.

The bias voltage required to provide a sufficiently strong electric field within the diffusion chamber may be of the order of 10 V. In order to minimise the size of the instrument, this voltage is preferably achieved by using a DC to DC converter which upscales the voltage provided by the batteries. For example three ordinary batteries at 1.5 V can be connected in series to provide 4.5 V, which then needs to be doubled to achieve the necessary bias voltage. Alternatively, two 1.5 V cells connected in series could be tripled to achieve the necessary bias voltage. Reducing the number of batteries in this way can significantly reduce the size of the instrument.

According to the present invention there is provided a radon gas sensor instrument comprising: a diffusion chamber with conductive walls and with a sensor disposed within the diffusion chamber; a microcontroller; a regulated voltage source; and a charge pump arranged to take its input from the regulated voltage source and to provide a charge pump output potential of greater magnitude than the potential of said input; wherein the charge pump output is arranged to provide an electric field between the sensor and the conductive walls of the diffusion chamber; and wherein the regulated voltage source is provided by a microcontroller of the instrument. The regulated voltage source is also arranged to power an LCD display of the instrument.

Various voltage regulator circuits are available which can provide stable output voltages, but these are typically either inefficient in terms of power consumption or are bulky in terms of circuit area (e.g. those using inductors). Therefore these are not ideal for a compact and low power instrument. Instead, a simple DC to DC converter such as a charge pump is used, but as a charge pump simply provides a multiple of its input voltage, the degradation of the battery output voltage with time means that the charge pump output similarly degrades. For example a charge pump which triples an input voltage taken from two 1.5 V cells provides an output ranging from 9.6 V at the start of the battery life (when they provide 1.6 V each) down to 6.6 V at the end of the battery life (when they each provide 1.1 V). It will be appreciated that this does not provide a sufficiently regulated bias voltage for the diffusion chamber. Therefore, according to the invention, the charge pump is driven from a regulated voltage supply. The invention makes use of a regulated voltage supply that is already provided for another purpose, thus avoiding the need to provide additional voltage regulation circuitry in order to stabilize the strength of the electric field in the diffusion chamber. However, as the regulated voltage supply is provided for a different purpose, a charge pump is used to multiply the voltage up to a suitable level. A charge pump has the advantage of being a simple circuit with few components which can be manufactured inexpensively. The charge pump can also be designed for its specific purpose which in this case has a very low current drain (approximately 10 nA typically). Therefore small capacitors can be used and the power consumption of the circuit can be minimised, thus prolonging battery life.

It will be appreciated that the charge pump output can be connected either to the conductive chamber walls or to the sensor, with the other component connected to ground (or to some other reference voltage). However, in preferred embodiments the charge pump output is applied to the sensor, while the diffusion chamber walls are connected to ground. In preferred embodiments, the diffusion chamber walls are made conductive by a process which makes the whole inside of the instrument casing conductive. This may be achieved by forming the diffusion chamber walls integrally with the instrument housing and either forming the housing from conductive plastics or by coating the interior of the housing with a thin conductive coating, e.g. using a vacuum metallization process, or other thin film deposition or coating process. The housing and the chamber walls are then electrically connected and it is preferred that these be at ground potential. In an alternative embodiment, the diffusion chamber walls could be provided with the potential from the charge pump, with the sensor held at ground.

The potential output from the charge pump may be either positive or negative. The skilled person will be able to select the direction of the electric field appropriately according to the type of sensor and the types of particles to be attracted or repelled. In the case of a radon gas sensor, it is desired to attract the positively charged daughter products of radon decays onto the sensor and thus the electric field must encourage movement of positive ions towards the sensor. Thus may be achieved by positively biasing the walls of the diffusion chamber or by negatively biasing the sensor.

As mentioned above, the regulated voltage source may be provided for any purpose. The regulated voltage source is also arranged to power an LCD display of the instrument. Gas sensor instruments will frequently also be provided with an LCD display which requires a regulated voltage. Therefore combining the voltage regulator for the two purposes reduces components and therefore reduces cost as well as reducing power consumption of the instrument while running and thus prolonging battery life. It will be appreciated that the regulated voltage supply may also be used for display types other than liquid crystal displays (e.g. LED displays) or for a completely separate purpose within the instrument.

The regulated voltage source is provided by a microcontroller of the instrument. Available microcontrollers are often provided with an internal voltage regulator which provides regulated power for some purpose (typically for supplying power to an LCD display).

In preferred embodiments, the instrument is arranged to provide a pulsed drive signal to drive the charge pump, the pulsed drive signal is connected to the logical input of a logic gate, the regulated voltage source is connected to the power supply of the logic gate and the output of the logic gate is connected to the charge pump. The use of a logic gate in this manner allows a non-regulated pulsed output to be used to generate a regulated pulsed output using the available steady (non-pulsed) regulated supply from the regulated voltage source. It will be appreciated that the above-described connections may be direct connections, but need not always be direct connections, i.e. there may be intervening components so long as the functionality described above is retained.

The logic gate may be any logic gate, or configuration of logic gates where the single output depends on the single input (i.e. a change of state in the input will result in a change of state in the output). In the most preferred embodiments a single inverter (NOT gate) is used as this is a simple and straightforward configuration. Other embodiments could use AND, NAND, OR or NOR gates with the two inputs tied together. The presence or absence of inversion is generally not of any consequence when the input is a square wave. The skilled person will be able to select an appropriate setup according to the circumstances. The important feature is that the output of the logic gate is provided by the regulated supply voltage, whereas the input may be unregulated. This is typically the case for all logic gates of CMOS type where the output logic levels '0' and '1' are essentially equivalent to the low and high supply voltage levels, respectively.

In particularly preferred embodiments, a microcontroller provides both the regulated voltage source and the pulsed drive signal. Microcontrollers are often readily set up for outputting both such components. Therefore using a single microcontroller to generate both the pulsed drive signal and the regulated voltage source reduces the overall complexity, the overall number of components and therefore reduces the cost of the instrument.

It will be appreciated that the magnitude of the pulsed drive signal may be proportional to the unregulated microcontroller power supply.

Although the charge pump output potential itself is suitable for creating the desired electric field, in some preferred embodiments, the charge pump output potential is supplemented by a battery. By adding the potential of the battery to the output potential of the charge pump, a greater total output voltage is achieved. Although this arrangement introduces the variability of the battery over its lifetime, this variability is much less than if batteries alone were used. The use of a supplementary battery in this manner allows the charge pump to generate a lower output for a given total output voltage, thus allowing a smaller charge pump to be used, with correspondingly fewer components and lower power consumption.

The circuitry and functionality described above may be utilized in devices of different sizes and with different types of power supply. However it is most valuable in small instruments which do not have larger power supplies and where minimisation of power consumption is important. In particularly preferred embodiments therefore, the instrument is powered solely by batteries.

The circuitry and functionality may also apply to a variety of gas sensors which use a sensor inside a diffusion chamber. The sensor used in the diffusion chamber will depend on the properties of the gas to be detected. One particularly preferred use is in radon gas sensors with an alpha-particle detector as the sensor. Radon and its daughter products emit alpha particles which can be detected to provide an estimate of the concentration of radon within the diffusion chamber. Typically, a photodiode is used as the sensor to detect alpha particles incident thereon.

According to another aspect, the invention provides a method of providing an electric field between conductive walls of a diffusion chamber of a radon gas sensor instrument and a sensor disposed within the diffusion chamber; said method comprising: providing a regulated voltage source as an input to a charge pump to provide a charge pump output potential of greater magnitude than the potential of said regulated voltage source; and providing said charge pump output potential between said sensor and said conductive walls; wherein the regulated voltage source is provided by a microcontroller of the instrument. The regulated voltage source also provides power to an LCD display of the instrument.

The preferred features described above in relation to the apparatus apply equally to the method and vice versa. The method preferably comprises: providing a pulsed charge pump drive signal to the logical input of a logic gate using the regulated voltage source as the power supply of the logic gate; and using the output of the logic gate to drive the charge pump.

Preferably a microcontroller provides both the regulated voltage source and the pulsed charge pump drive signal. Preferably the charge pump output potential is supplemented by a battery. Preferably the instrument is powered solely by batteries.

Preferred embodiments of the invention will now be described, by way of example only, and with reference to the accompanying drawings in which:

Figs. 1a and 1b illustrate a typical diffusion chamber according to an embodiment of the invention;
Fig. 2 schematically illustrates a typical circuit configuration according to an embodiment of the invention;
Fig. 3 illustrates a charge pump circuit according to an embodiment of the invention; and
Fig. 4 shows an exploded view of a radon gas sensor instrument according to an embodiment of the invention.

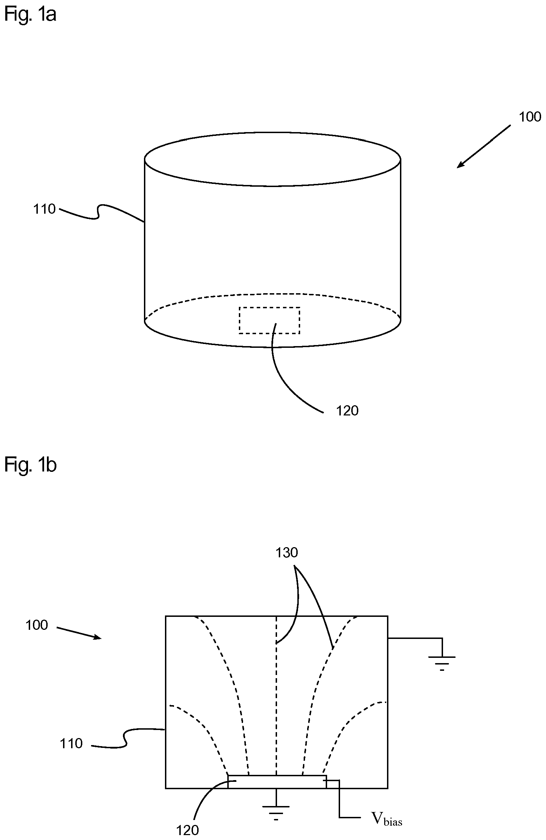

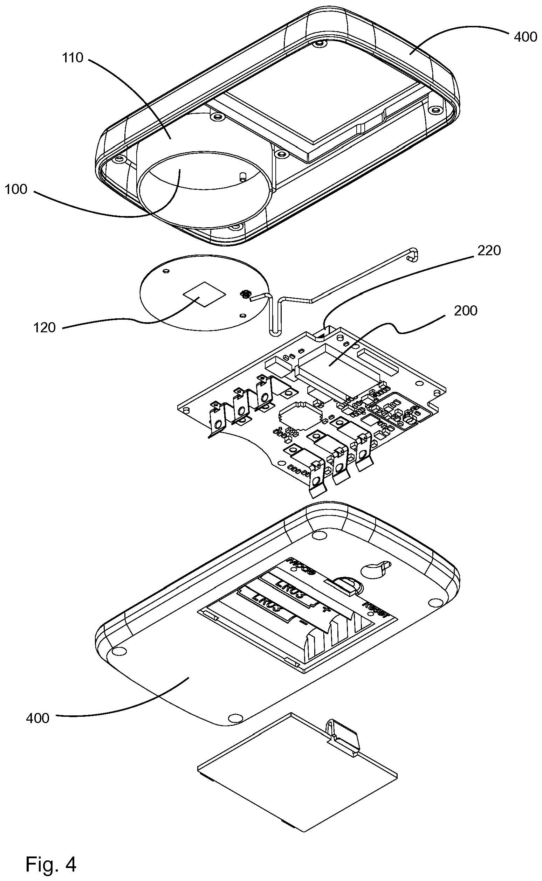

Fig. 1a shows a diffusion chamber 100 of a radon gas sensor instrument. The diffusion chamber 100 is schematically illustrated here as a simple cylinder. In reality the chamber is typically formed from two cylindrical chamber halves, each open at one end and brought together in overlapping relationship to form the diffusion chamber 100 as shown in Fig. 4.

The chamber 100 comprises chamber walls 110 which are electrically connected to ground (i.e. the common ground rail of the circuitry within the instrument). Inside the chamber 100 is a photodiode 120 the upper face of which is electrically connected to $V_{bias}$ which will be described in more detail below. These electrical connections create a static electric field 130 within the chamber as illustrated in Fig. 1b.

$V_{bias}$ is typically a highly negative potential relative to ground and thus the electric field 130 causes positively charged particles to drift towards the upper surface of photodiode 120.

When Radon-222 atoms decay by emitting an alpha particle, the resulting Polonium-218 atoms are mostly (about 80%) positively charged ions (the rest being neutral) and thus when a Radon-222 atom decays within the diffusion chamber 100, the electric field 130 pushes the Polonium-218 ions towards the photodiode 120 where they land. Alpha particles emitted from the Polonium-218 atoms (or the daughter products thereof) have a 50% chance of being detected by the photodiode 120 as the alpha particle can either go up into the diffusion chamber 100 where it is not detected by the photodiode 120 or down into the photodiode 120 where it is detected. This represents a much higher probability of detection compared with a diffusion chamber with no electric field as in such an arrangement the Polonium-218 atoms and daughter products will most likely plate out on the walls and ceiling of the chamber 100 from where there is a much smaller chance that an alpha particle emitted in a random direction will strike the photodiode 120.

It can be seen in Fig. 1b that the upper face (i.e. the one facing the diffusion chamber) of the photodiode 120 is biased with $V_{bias}$, while the lower face (opposite the upper face) is held at ground. This provides a strong reverse bias across the photodiode 120, thus creating a large depletion zone at its p-n junction. It should be noted that the photodiode 120 does not need to be reverse biased at all in order to detect alpha particles incident thereon, but the reverse bias decreases the capacitance of the photodiode 120 which in turn reduces the noise and significantly improves the signal to noise ratio for the output signal.

Additionally, when an incident alpha particle strikes the photodiode, it releases a cloud of electron-hole pairs within the depletion zone. The strong reverse bias across the photodiode 120 increases the speed of extraction of these charges and thus provides a more rapid response signal.

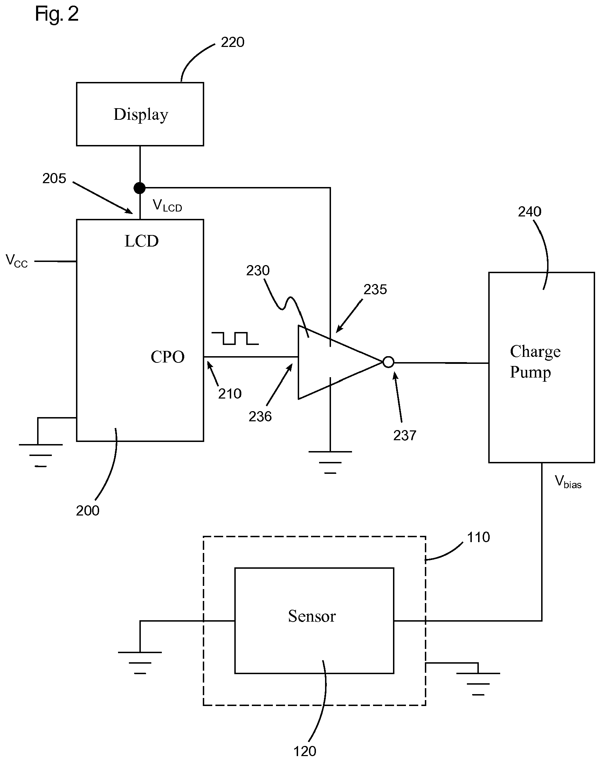

Fig. 2 schematically illustrates a circuit for generating $V_{bias}$. Microcontroller unit (MCU) 200 is a programmable controller which controls the various elements of the radon instrument and performs much of the signal processing and analysis which turns the raw data from the sensor 120 into an estimate of the concentration of Radon-222 in the diffusion chamber 100. The microcontroller 200 also controls an LCD display to provide information to a user of the instrument, including a continuous read-out of the estimated radon concentration. Control of an LCD display is a common requirement of such microcontrollers 200. LCD displays require a regulated supply voltage and therefore microcontroller 200 provides an LCD supply pin 205 with a regulated voltage generated by a voltage regulator circuit internal to the microcontroller 200. This LCD supply pin 205 typically supplies about 3.2 V to the LCD display 220.

The power for MCU 200 on the other hand is derived from batteries. The instrument described here is a small portable instrument and is not powered by a mains supply (or other external supply). Instead the instrument runs off batteries carried within the instrument housing 400. The batteries are typically alkaline or other dry cell batteries although other electrochemical cells could also be used. The instrument described here is powered from three 1.5 V AAA cells of the kind readily commercially available, although it will be appreciated that other size cells and/or different supply voltages may be used.

These batteries typically start life with an output voltage of around 1.6 V, but over time they degrade to about 1.1 V or 1.0 V at which time they need to be replaced. The MCU 200 is supplied from two of these batteries and therefore experiences a supply voltage ranging from about 3.2 V down to about 2.2 V. The MCU 200 regulates the output of LCD supply pin 205 to a constant 3.2 V, but the remaining outputs of the MCU are proportional to the MCU supply voltage ($V_{cc}$).

To create a sufficiently strong electric field within the diffusion chamber 100, $V_{bias}$ typically needs to be around 10 V at least. A higher voltage could be used, but around 10 V is found to be sufficient. A reverse bias of 10 V is also adequate to reduce the capacitance of the photodiode 120 sufficiently to get a good signal to noise ratio for the output signal and therefore the same bias voltage can be used for both purposes. It will be appreciated that in other embodiments, the photodiode 120 may remain unbiased or the photodiode could be reverse biased with a different potential than that used for the electric field 130. The photodiode 120 can typically be biased up to around 30 V, but the gains beyond 10 V are not significant and the circuit required to step up the voltage to a higher level would require more components and would consume more power.

To provide the bias voltage $V_{bias}$ for the photodiode 120, it is therefore necessary to generate a higher voltage than can be supplied directly by the batteries. Commercially available voltage regulators are typically designed for higher loads than are required for the present application (the photodiode 120 draws only around 10 nA) and consequently consume more power than is necessary, beside typically being more expensive than the described solution. To reduce cost and minimise power consumption, a charge pump 240 is used instead. The charge pump 240 can be designed for very low current consumption, but it only provides a voltage multiplier effect, so it is still limited by the variation in battery supply voltage throughout the life of the batteries. For example, a charge pump driven from two nominal 1.5 V cells and designed to triple the voltage would provide an output which varied from 9.6 V with fresh batteries to 6.6 V with nearly dead batteries. If this output was supplied as $V_{bias}$, the strength of the electric field 130 within chamber 100 would vary significantly throughout the battery lifetime. This causes problems as a variation in the strength of electric field 130 means a variation on the proportion of radon daughter products which plate out on the photodiode 120. As described above, the calculation of the estimate of radon concentration within the diffusion chamber 100 depends on knowing this ratio. Therefore variations of that ratio lead to inaccuracy in the radon estimates provided by the instrument.

To stabilize $V_{bias}$, the charge pump 240 is driven from the regulated voltage provided on the MCU's LCD supply pin 205. As this voltage is already regulated at 3.2 V, the charge pump 240 can triple that voltage and provide a stable 9.6 V to create electric field 130 and to reverse bias photodiode 120. Making use of an already stabilized voltage means that further voltage regulation circuitry is not required (saving cost and power consumption) and the voltage multiplier can be a simple charge pump 240 and still provide a stable $V_{bias}$.

The use of the LCD supply pin 205 of MCU 200 is particularly beneficial as commercially available MCUs already provide such functionality.

The charge pump 240 relies on a pulsed input, but the MCU supply pin 205 provides a constant voltage to the LCD display 220. Therefore in order to generate a pulsed input to the charge pump 240 at the regulated voltage, a pulsed (typically a square wave) output 210 from the MCU (labeled CPO in Fig. 2) is used to drive an inverter 230. The inverter supply pin 235 is then connected to the LCD supply pin 205 and the inverter 230 thus provides a pulsed output at the regulated voltage, regardless of the magnitude of the pulsed input. The pulsed output 210 of MCU 200 is not a regulated output and so the magnitude of that output voltage varies in proportion to the MCU supply voltage ($V_{CC}$) which in turn varies with the output of the batteries. However the charge pump 240 provides a regulated $V_{bias}$ output and thus the electric field 130 in diffusion chamber 100 is stabilized throughout the battery life and thus the radon concentration estimates provided by the instrument have improved accuracy throughout the lifetime of the batteries.

It will be appreciated that, although an inverter is used in the embodiment described here, other embodiments could use either an AND gate, a NAND gate, an OR gate or a NOR gate, in each case with its inputs tied together. The logic gate is typically implemented in a single small package, for example a SOT23 or a SC70 SMD package.

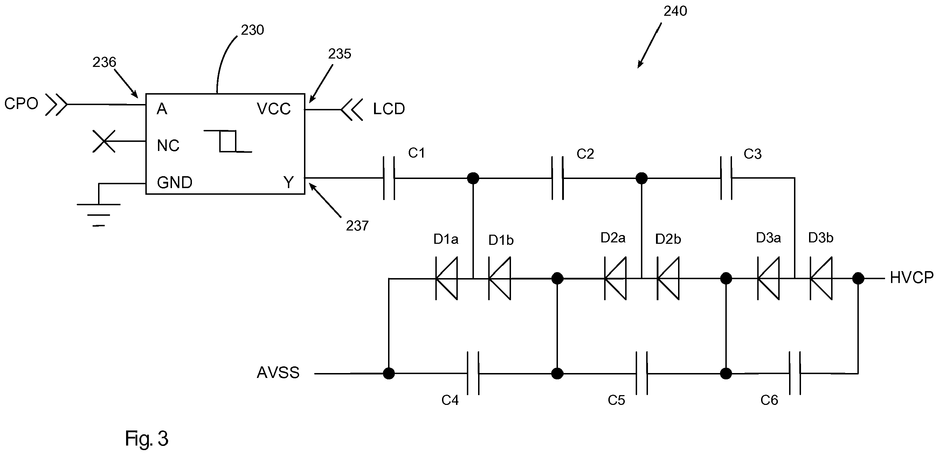

An example charge pump circuit 240 is shown in Fig. 3. The charge pump 240 shown here is a Cockroft-Walton voltage multiplier arrangement with three stages, thus tripling the input voltage. The CPO input at pin 236 of inverter 230 is the non-regulated square wave pulse from pin 210 of MCU 200 shown in Fig. 2. The logically inverted output provided by inverter 230 at output pin 237 has a magnitude of the supply voltage provided at pin 235, in this case the LCD supply voltage $V_{LCD}$ from MCU pin 205. Diodes D1a and D1b together are a commercially available dual diode package. Likewise diodes D2a, D2b and D3a, D3b. Capacitors C1-C6 are all the same value. In this embodiment C1-C6 are all 10 nF. In typical embodiments, the capacitors C1-C6 may be 1 to 10 nF, however this depends, amongst other factors, on the drive frequency and therefore the capacitances may be above or below this range in other applications. The skilled person will be able to select appropriate values. In other embodiments the capacitors C1-C6 need not all be the same value. The bottom of charge pump 240, labelled AVSS in Fig. 3 can be tied to ground for best stability. The output, labeled HVCP in Fig. 3 is the output voltage $V_{bias}$. It will be appreciated that, although three stages are shown here, any number of stages may be used in the charge pump 240 to generate the desired output voltage $V_{bias}$.

In an alternative embodiment, the bottom of charge pump 240 (AVSS) is not tied to ground, but is instead tied to a negative supply. In this embodiment, the instrument uses three AAA batteries. Two of these batteries are used for the supply $V_{CC}$ of the MCU 200 and the third provides a negative supply which is connected to AVSS. This negative supply voltage is added to the output of the charge pump (which is also negative) and thus increases $V_{bias}$. The negative supply voltage will vary with the battery's life time from -1.6 V to -1.1 V and thus adds back in some variation in $V_{bias}$ compared with the fully regulated embodiment described above. This solution is therefore somewhat counter-intuitive, but the use of the negative supply means that fewer multiplier stages are needed in the charge pump 240. This in turn means fewer components (fewer diodes and fewer capacitors) and also lower power consumption. The variation in $V_{bias}$ is still significantly less than would be experienced if $V_{CC}$ were used to drive the charge pump rather the $V_{LCD}$ and the variation is found to be tolerable as the accuracy of radon estimates are not significantly adversely affected.

By way of comparison, the voltage supplied by the circuit shown in Fig. 3, with $V_{CC}$ used as the supply to the charge pump 240 and the negative supply $V_{SS}$ connected to the bottom of charge pump 240 is

$$V_{bias} = V_{SS} - 3 \cdot V_{CC} + 1.2 . \qquad (1)$$

NB. The value of 1.2 in Equation (1) is due to the diodes.

If, over the life time of the batteries, $V_{SS}$ varies from -1.6 V to -1.1 V and Vcc varies from 3.2 V to 2.2 V, then according to equation (1), $V_{bias}$ will vary from -10 V to -6.5 V, i.e. $V_{bias}$ = - 8.25V $\pm$ 21%. Using $V_{LCD}$ in place of $V_{CC}$, $V_{bias}$ will vary from -10 V to -9.5 V, i.e. $V_{bias}$ = -9.75V $\pm$ 2.5%. This arrangement therefore still represents a factor 8 reduction in the variability of $V_{bias}$.

**Claims**

1. A radon gas sensor instrument comprising:

   a diffusion chamber (100) with conductive walls (110) and with a sensor (120) disposed within the diffusion chamber and a regulated voltage source (205); **characterised by** further comprising:

       a microcontroller (200); and
       a charge pump (240) arranged to take its input from the regulated voltage source (205) and to provide a charge pump output potential of greater magnitude than the potential of said input;

   wherein the charge pump output is arranged to provide an electric field (130) between the sensor (120) and the conductive walls (110) of the diffusion chamber (100);
   wherein the regulated voltage source (205) is provided by the microcontroller (200); and
   wherein the regulated voltage source (205) is also arranged to power an LCD display (220) of the instrument.

2. A gas sensor instrument as claimed in claim 1, wherein the instrument is arranged to provide a pulsed drive signal to drive the charge pump (240), the pulsed drive signal is connected to the logical input (236) of a logic gate (230), the regulated voltage source (205) is connected to the power supply of the logic gate and the output (237) of the logic gate (230) is connected to the charge pump (240).

3. A gas sensor instrument as claimed in claim 2, wherein the microcontroller (200) provides both the regulated voltage source (205) and the pulsed drive signal.

4. A gas sensor instrument as claimed in any preceding claim, wherein the charge pump output potential is supplemented by a battery.

5. A gas sensor instrument as claimed in any preceding claim, wherein the instrument is powered solely by batteries.

6. A method of providing an electric field (130) between conductive walls (110) of a diffusion chamber (100) of a radon gas sensor instrument and a sensor (120) disposed within the diffusion chamber (100); said method comprising:

   providing a regulated voltage source (205) as an input to a charge pump (240) to provide a charge pump output potential of greater magnitude than the potential of said regulated voltage source (205); and
   providing said charge pump output potential between said sensor (120) and said conductive walls (110);
   wherein the regulated voltage source (205) is provided by a microcontroller (200) of the instrument; and
   wherein the regulated voltage source (205) also provides power to an LCD display (220) of the instrument.

7. A method as claimed in claim 6, comprising:

   providing a pulsed charge pump drive signal to the logical input of a logic gate (230);
   using the regulated voltage source (205) as the power supply of the logic gate (230); and
   using the output of the logic gate (230) to drive the charge pump (240).

8. A method as claimed in claim 7, wherein the microcontroller (200) provides both the regulated voltage source (205) and the pulsed charge pump drive signal.

9. A method as claimed in any of claims 6 to 8, wherein the charge pump output potential is supplemented by a battery.

10. A method as claimed in any of claims 6 to 9, wherein the instrument is powered solely by batteries.


**Patentansprüche**

1. Radongas-Sensorinstrument, umfassend:

   eine Diffusionskammer (100) mit leitfähigen Wänden (110) und mit einem Sensor (120), der innerhalb der Diffusionskammer angeordnet ist, und eine geregelte Spannungsquelle (205); **gekennzeichnet dadurch, dass** sie weiter umfasst:

   einen Mikrocontroller (200); und
   eine Ladungspumpe (240), die dafür ausgelegt ist, ihre Eingabe von der geregelten Spannungsquelle (205) zu nehmen und ein Ladungspumpen-Ausgangspotenzial von größerer Stärke als das Potenzial der Eingabe bereitzustellen;

   wobei der Ladungspumpen-Ausgang dafür ausgelegt ist, ein elektrisches Feld (130) zwischen dem Sensor (120) und den leitfähigen Wänden (110) der Diffusionskammer (100) bereitzustellen;
   wobei die geregelte Spannungsquelle (205) durch den Mikrocontroller (200) bereitgestellt wird; und
   wobei die geregelte Spannungsquelle (205) auch dafür ausgelegt ist, ein LCD-Display (220) des Instrumentes mit Spannung zu versorgen.

2. Gas-Sensorinstrument nach Anspruch 1, wobei das Instrument dafür ausgelegt ist, ein gepulstes Antriebssignal zum Antreiben der Ladungspumpe (240) bereitzustellen, wobei das gepulste Antriebssignal mit dem logischen Eingang (236) eines Logikgatters (230) verbunden ist, wobei die geregelte Spannungsquelle (205) mit der Stromversorgung des Logikgatters verbunden ist und wobei der Ausgang (237) des Logikgatters (230) ist mit der Ladungspumpe (240) verbunden.

3. Gas-Sensorinstrument nach Anspruch 2, wobei der Mikrocontroller (200) sowohl die geregelte Spannungsquelle (205) als auch das gepulste Antriebssignal bereitstellt.

**4.** Gas-Sensorinstrument nach einem der vorherigen Ansprüche, wobei das Ladungspumpen-Ausgangspotenzial durch eine Batterie ergänzt wird.

**5.** Gas-Sensorinstrument nach einem der vorherigen Ansprüche, wobei das Instrument allein durch Batterien mit Spannung versorgt wird.

**6.** Verfahren zum Bereitstellen eines elektrischen Feldes (130) zwischen leitfähigen Wänden (110) einer Diffusionskammer (100) eines Radongas-Sensorinstrumentes und einem Sensor (120), der innerhalb der Diffusionskammer (100) angeordnet ist; wobei das Verfahren umfasst:

Bereitstellen einer geregelten Spannungsquelle (205) als Eingang zu einer Ladungspumpe (240), um ein Ladungspumpen-Ausgangspotenzial von einem größeren Betrag als das Potenzial der geregelten Spannungsquelle (205) bereitzustellen; und
Bereitstellen des Ladungspumpen-Ausgangspotenzials zwischen dem Sensor (120) und den leitfähigen Wänden (110);
wobei die geregelte Spannungsquelle (205) durch einen Mikrocontroller (200) des Instrumentes bereitgestellt wird; und
wobei die geregelte Spannungsquelle (205) auch Energie für ein LCD-Display (220) des Instrumentes bereitstellt.

**7.** Verfahren nach Anspruch 6, umfassend:

Bereitstellen eines gepulsten Pumpen-Antriebssignals am logischen Eingang eines Logikgatters (230);
Verwenden der geregelten Spannungsquelle (205) als Stromversorgung für das Logikgatter (230); und
Verwenden der Ausgabe des Logikgatters (230) zum Antreiben der Ladungspumpe (240).

**8.** Verfahren nach Anspruch 7, wobei der Mikrocontroller (200) sowohl die geregelte Spannungsquelle (205) als auch das gepulste Ladungspumpen-Antriebssignal bereitstellt.

**9.** Verfahren nach einem der Ansprüche 6 bis 8, wobei das Ladungspumpen-Ausgangspotenzial durch eine Batterie ergänzt wird.

**10.** Verfahren nach einem der Ansprüche 6 bis 9, wobei das Instrument allein durch Batterien mit Spannung versorgt wird.

**Revendications**

**1.** Instrument capteur de gaz radon comprenant :

une chambre de diffusion (100) à parois conductrices (110) et avec un capteur (120) disposé au sein de la chambre de diffusion et une source de tension régulée (205) ; **caractérisé en ce qu'**il comprend en outre :

un microcontrôleur (200) ;
et
une pompe de charge (240) agencée pour prendre son entrée à partir de la source de tension régulée (205) et pour fournir un potentiel de sortie de pompe de charge d'une amplitude supérieure au potentiel de ladite entrée ;

dans lequel la sortie de pompe de charge est agencée pour fournir un champ électrique (130) entre le capteur (120) et les parois conductrices (110) de la chambre de diffusion (100) ;
dans lequel la source de tension régulée (205) est fournie par le microcontrôleur (200) ; et
dans lequel la source de tension régulée (205) est agencée également pour alimenter un écran LCD (220) de l'instrument.

**2.** Instrument capteur de gaz tel que revendiqué dans la revendication 1, dans lequel l'instrument est agencé pour fournir un signal d'entraînement pulsé pour entraîner la pompe de charge (240), le signal d'entraînement pulsé est connecté à l'entrée logique (236) d'une porte logique (230), la source de tension régulée (205) est connectée à l'alimentation électrique de la porte logique et la sortie (237) de la porte logique (230) est connectée à la pompe de charge (240).

3. Instrument capteur de gaz tel que revendiqué dans la revendication 2, dans lequel le microcontrôleur (200) fournit à la fois la source de tension régulée (205) et le signal d'entraînement pulsé.

4. Instrument capteur de gaz tel que revendiqué dans l'une quelconque des revendications précédentes, dans lequel le potentiel de sortie de pompe de charge est complété par une pile.

5. Instrument capteur de gaz tel que revendiqué dans l'une quelconque des revendications précédentes, dans lequel l'instrument est alimenté uniquement par des piles.

6. Procédé de fourniture d'un champ électrique (130) entre des parois conductrices (110) d'une chambre de diffusion (100) d'un instrument capteur de gaz radon et un capteur (120) disposé au sein de la chambre de diffusion (100) ; ledit procédé comprenant les étapes consistant à :

   fournir une source de tension régulée (205) en tant qu'entrée à une pompe de charge (240) pour fournir un potentiel de sortie de pompe de charge d'une amplitude supérieure au potentiel de ladite source de tension régulée (205) ; et
   fournir ledit potentiel de sortie de pompe de charge entre ledit capteur (120) et lesdites parois conductrices (110) ; dans lequel la source de tension régulée (205) est fournie par un microcontrôleur (200) de l'instrument ; et dans lequel la source de tension régulée (205) fournit également une alimentation à un écran LCD (220) de l'instrument.

7. Procédé tel que revendiqué dans la revendication 6, comprenant les étapes consistant à :

   fournir un signal d'entraînement de pompe de charge pulsée à l'entrée logique d'une porte logique (230) ;
   utiliser la source de tension régulée (205) comme l'alimentation électrique de la porte logique (230) ; et
   utiliser la sortie de la porte logique (230) pour entraîner la pompe de charge (240).

8. Procédé tel que revendiqué dans la revendication 7, dans lequel le microcontrôleur (200) fournit à la fois la source de tension régulée (205) et le signal d'entraînement de pompe de charge pulsé.

9. Procédé tel que revendiqué dans l'une quelconque des revendications 6 à 8, dans lequel le potentiel de sortie de pompe de charge est complété par une pile.

10. Procédé tel que revendiqué dans l'une quelconque des revendications 6 à 9, dans lequel l'instrument est alimenté uniquement par des piles.

Fig. 1a

Fig. 1b

Fig. 2

Fig. 3

Fig. 4

**EP 2 734 862 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008080753 A
- US 20090230305 A
- CA 2424267 A1
- US 5489780 A